# FASCICULE DE BREVET EUROPEEN

(11) **EP 3 730 402 B1**
(45) Date de publication et mention de la délivrance du brevet: **02.03.2022**
(21) Numéro de dépôt: 20171191.8
(22) Date de dépôt: 23.04.2020
(51) Int. Cl.: B64C 25/60, B64D 45/00, B64C 25/00, B64C 25/58, B64C 25/50

(54) **ATTERRISSEUR D'AERONEF EQUIPE D'UN DISPOSITIF DE DETECTION DE VENUE EN BUTEE INTERNE DE SON AMORTISSEUR EN POSITION COMPRESSEE**
LUFTFAHRZEUGFAHRWERK, DAS MIT EINER VORRICHTUNG ZUM ERKENNEN DES ERREICHENS DES INNENANSCHLAGS SEINES STOSSDÄMPFERS IN DER KOMPRIMIERTEN POSITION AUSGESTATTET IST
AIRCRAFT LANDING GEAR PROVIDED WITH A DEVICE FOR DETECTING THE INTERNAL ABUTMENT OF ITS SHOCK ABSORBER IN A COMPRESSED POSITION

(30) Priorité: 25.04.2019 FR 1904390
(43) Date de publication de la demande: 28.10.2020
(73) Titulaire: Safran Landing Systems, 78140 Vélizy-Villacoublay (FR)
(72) Inventeur: FARCY, Marc, 77550 MOISSY-CRAMAYEL (FR); FAURE, Thibault, 77550 MOISSY-CRAMAYEL (FR); RENAULT, Frédéric, 77550 MOISSY-CRAMAYEL (FR)
(74) Mandataire: Lavialle, Bruno François Stéphane

(56) Documents cités:
- GB-A- 2 474 686
- US-A1- 2011 214 601

## Description

### ARRIERE PLAN DE L'INVENTION

Les atterrisseurs des aéronefs comportent en général un amortisseur comportant deux éléments associés à coulissement télescopique. Dans les atterrisseurs directs, l'un des éléments de l'amortisseur forme le caisson de l'atterrisseur solidarisé à la structure de l'aéronef, tandis que l'autre des éléments est une tige coulissante portant les roues de l'atterrisseur. Dans les atterrisseurs à levier, l'amortisseur est attelé d'une part à un caisson de l'atterrisseur solidarisé à la structure de l'aéronef, et d'autre part à un levier articulé sur le caisson et portant les roues de l'atterrisseur.

Il peut arriver exceptionnellement que l'aéronef subisse un atterrissage dur lors duquel l'amortisseur de l'atterrisseur est si compressé que les deux éléments de l'amortisseur viennent en butée interne (on parle alors de « bottoming »), induisant un risque de déformation des pièces constitutives de l'amortisseur. Cet événement peut également advenir lors d'un atterrissage normal, lorsque l'amortisseur n'est pas conditionné correctement, ou présente un déficit de pression de gonflage ou de volume de fluide hydraulique interne. Il convient de détecter toute venue en butée interne pour procéder à une inspection de l'amortisseur et vérifier l'état des pièces constitutives de celui-ci.

Différents dispositifs de détection de butée interne sont connus. Certains de ces dispositifs comprennent un témoin externe qui est agencé pour être déplacé lors de la venue en butée interne de l'atterrisseur d'une position non-indicative à une position indicative d'une telle venue en butée. Un tel témoin est par exemple décrit dans le document US20110214601. Ce témoin bouge d'une position à l'autre à la suite de la rupture en cisaillement d'une broche provoquée par la venue en butée interne de l'amortisseur. Le remplacement de cette broche impose de démonter entièrement le dispositif d'indication.

On connaît d'autres dispositifs de détection comportant des capteurs susceptibles de détecter la présence d'une cible amenée à proximité immédiate du capteur lorsque l'amortisseur vient en butée interne. Cependant, un tel dispositif pose des problèmes de fiabilité. Il doit être régulièrement testé, et il peut toujours défaillir ou au contraire déclencher de fausses alertes.

### OBJET DE L'INVENTION

L'invention a pour objet un atterrisseur équipé d'un dispositif de détection de venue en butée interne d'un amortisseur de l'atterrisseur, très fiable, qui ne nécessite aucune rupture de pièce.

### RESUME DE L'INVENTION

En vue de la réalisation de ce but, on propose un atterrisseur d'aéronef comportant un amortisseur comportant des première et deuxième parties montées à coulissement télescopique et susceptibles de venir en butée interne lors d'une compression de l'amortisseur, l'atterrisseur étant équipé d'un dispositif de détection d'une venue en butée interne de l'amortisseur qui, selon l'invention, comprend d'une part un poinçon solidaire de la première partie de l'amortisseur ou d'une portion de l'atterrisseur qui ne coulisse pas relativement à la première partie de l'amortisseur, et d'autre part un martyr solidaire de la deuxième partie de l'amortisseur, ou d'une portion de l'atterrisseur qui ne coulisse pas relativement à la deuxième partie de l'amortisseur, le poinçon et le martyr étant disposés de sorte que le poinçon percute le martyr pour y former une empreinte quand les deux parties de l'amortisseur viennent en butée interne.

L'empreinte ainsi formée est très facilement repérable par le personnel de maintenance lors d'une inspection, et ne peut être effacée ou éliminée. Le dispositif de l'invention est très fiable, puisqu'il n'est pas susceptible de tomber en panne.

Selon un aspect particulier de l'invention, le poinçon est une pointe pyramidale. De préférence alors, la pointe pyramidale est solidaire d'une platine rapportée sur l'atterrisseur avec interposition de cales.

Selon un autre aspect particulier de l'invention, le martyr est une pastille. De préférence alors, la pastille est portée par un plateau venu de matière avec une tige coulissante de l'atterrisseur.

L'invention s'applique à un atterrisseur du type direct dans lequel la première partie de l'amortisseur est formée par un caisson de l'atterrisseur et la deuxième partie de l'amortisseur est formée par une tige coulissante portant au moins un essieu et montée à coulissement télescopique dans le caisson, et dans lequel le poinçon est porté par le caisson et le martyr par la tige coulissante.

L'invention s'applique également à un atterrisseur du type à balancier articulé sur un caisson, l'amortisseur étant attelé au balancier et au caisson et comportant un cylindre dans lequel une tige est montée à coulissement télescopique, le poinçon et le martyr étant solidaires pour l'un du cylindre et pour l'autre de la tige.

L'invention s'applique encore à un atterrisseur du type à commande d'orientation comportant un tube tournant monté tournant sur un caisson de l'atterrisseur et relié par un compas à une tige portant un essieu et montée coulissante dans le caisson, la tige formant un cylindre de l'amortisseur de l'atterrisseur, le poinçon et le martyr étant solidaires pour l'un de la tige et pour l'autre du tube tournant.

### BREVE DESCRIPTION DES DESSINS

L'invention sera mieux comprise à la lumière de la description qui suit en référence aux figures des dessins annexés parmi lesquelles :
[Fig. 1] La figure 1 est une vue en perspective de la partie basse d'un atterrisseur d'aéronef à amortisseur direct muni d'un dispositif de détection selon l'invention, l'amortisseur étant complètement détendu ;
[Fig. 2] La figure 2 est une vue agrandie de la zone A de la figure 1, montrant le poinçon du dispositif de détection de l'invention ;
[Fig. 3] La figure 3 est une vue agrandie de la zone B de la figure 1, montrant le martyr du dispositif de détection de l'invention ;
[Fig. 4] La figure 4 est une vue analogue à celle de la figure 1, l'amortisseur étant complètement compressé et venu en butée interne ;
[Fig. 5] La figure 5 est une vue agrandie de la zone C de la figure 4, montrant la percussion du martyr par le poinçon ;
[Fig. 6] La figure 6 est une vue en perspective d'un atterrisseur d'aéronef à balancier, équipé d'un dispositif de détection selon l'invention ;
[Fig. 7] La figure 7 est une vue en perspective d'un atterrisseur d'aéronef à roues orientables, équipé d'un dispositif de détection selon l'invention.

### DESCRIPTION DETAILLEE DE L'INVENTION

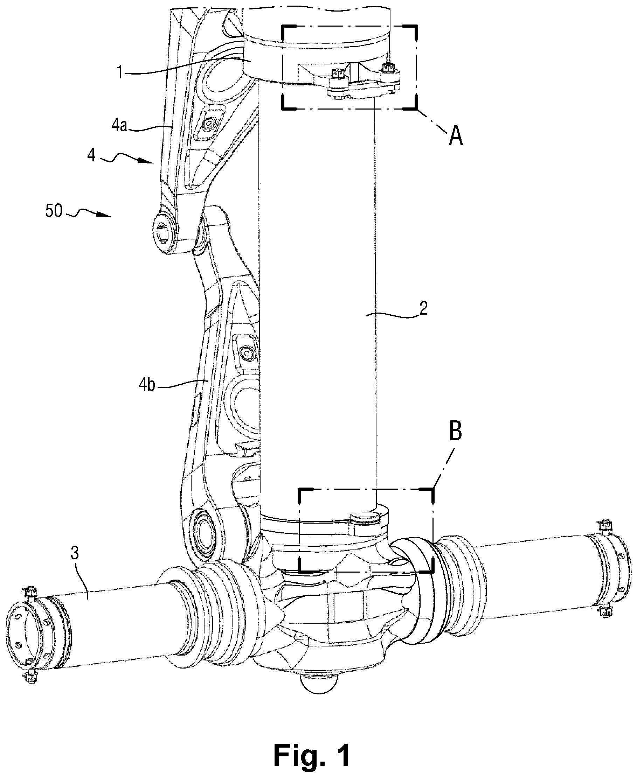

En référence à la figure 1, l'invention est ici appliquée à un atterrisseur d'aéronef 50 de type direct comportant un caisson 1 solidarisé à la structure de l'aéronef, et une tige coulissante 2 montée à coulissement télescopique dans le caisson 1 et qui porte à son extrémité un essieu 3 destiné à recevoir deux roues (non représentées pour plus de clarté). Le caisson 1 et la tige 2 forment les parties télescopiques d'un amortisseur, le caisson 1 formant le cylindre de l'amortisseur, tandis que la tige coulissante 2 en forme la tige. Un compas 4, comportant deux branches 4a et 4b articulées entre elles et respectivement articulées sur le caisson 1 et la tige coulissante 2 selon des axes d'articulation parallèles, empêche toute rotation relative du caisson 1 et de la tige coulissante 2, tout en permettant leur coulissement relatif.

La constitution interne de l'amortisseur est bien connue et n'est pas détaillée ici. Il suffit de rappeler que la tige coulissante 2 est en permanence rappelée vers la position sortie représentée et que l'amortisseur est compressé lors d'un atterrissage à l'encontre d'un effort d'amortissement interne comprenant une composante élastique générée par la compression d'un volume de gaz interne, et une composante non élastique générée par laminage d'un fluide hydraulique.

Lors d'atterrissages normaux, l'amortisseur n'est jamais compressé au point que la tige coulissante 2 vienne en butée interne en position compressée contre le caisson 1. Cependant, dans certaines circonstances exceptionnelles, un tel événement peut survenir, en cas par exemple d'atterrissage particulièrement dur, ou en cas d'atterrissage à vitesse et masse réglementaires alors que l'amortisseur souffre d'un défaut de conditionnement (fuite de fluide hydraulique, pression de gonflage insuffisante...) . Il convient de détecter à coup sûr cet évènement, car il peut en résulter un endommagement des parties internes de l'amortisseur. Une inspection doit être alors déclenchée pour s'assurer de l'absence d'un tel endommagement.

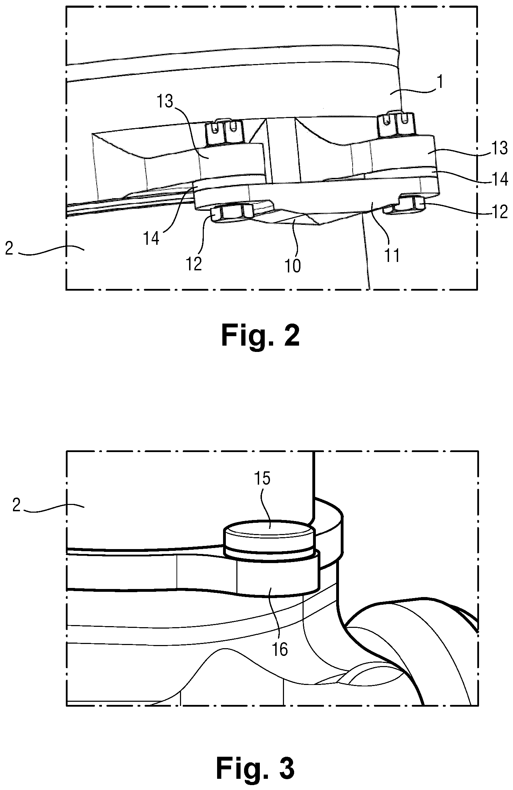

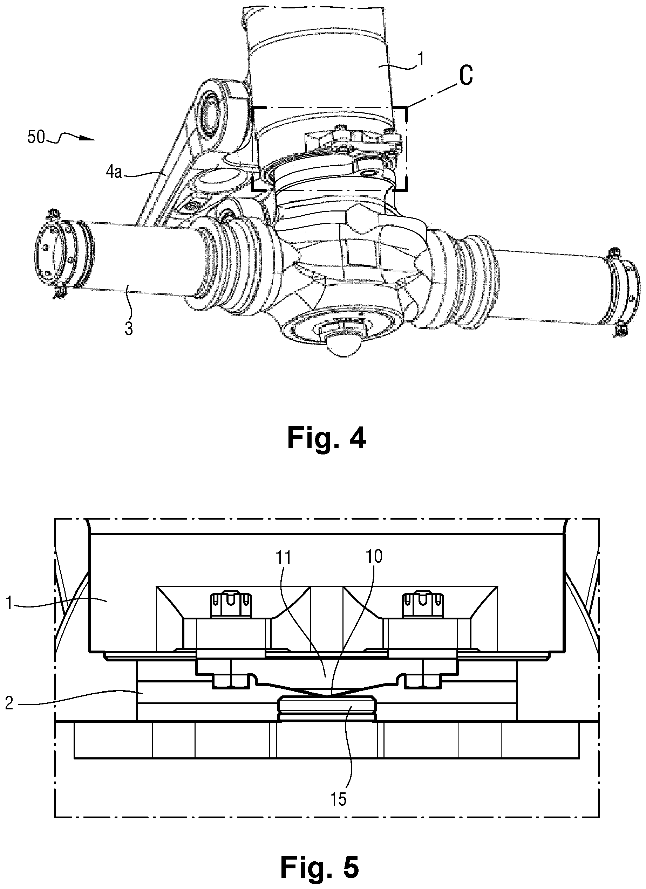

A cet effet, et conformément à l'invention, on équipe l'atterrisseur 50 d'un dispositif de détection de tels évènements. Comme cela est plus particulièrement visible aux figures 2 et 3, le dispositif de détection comporte d'une part un poinçon sous la forme ici d'une pointe pyramidale 10 formée sur la face inférieure d'une platine 11 qui est fixée en partie basse du caisson 1 au moyen de deux boulons 12 qui solidarisent la platine 11 à des chapes 13 du caisson 1 avec interposition de cales 14 d'épaisseur réglable (par exemple des cales pelables). Le dispositif de détection comporte d'autre part un martyr sous la forme ici d'une pastille 15, portée ici par un plateau 16 venu de matière avec la tige coulissante 2. Bien entendu, la pointe pyramidale 10 est réalisée dans une matière bien plus dure que celle de la pastille 15 qui elle, au contraire sera réalisée dans un matériau plus tendre susceptible d'être facilement marqué. Comme cela est visible aux figures 4 et 5, la pointe pyramidale 10 et la pastille 15 sont disposées relativement l'une à l'autre de sorte que quand l'amortisseur est complètement compressé au point de venir en butée interne, la pointe pyramidale 10 vient percuter la pastille 15 pour y laisser une empreinte pyramidale, indélébile. De la sorte, une telle venue en butée des parties télescopiques de l'amortisseur ne peut passer inaperçue et est très facilement détectée lors d'une inspection visuelle.

Si une empreinte est vue sur la pastille 15, après un atterrissage, c'est le signe que les deux parties télescopiques de l'amortisseur sont venues en butée interne et qu'il convient de démonter l'amortisseur pour en inspecter les pièces internes. Une fois l'inspection effectuée, il convient de remplacer la pastille qui a été marquée par une nouvelle pastille exempte de toute empreinte.

On notera que le niveau de déformation interne des pièces de l'amortisseur peut être estimé en inspectant l'empreinte laissée par la pointe pyramide 10 sur la pastille 15. En effet, l'empreinte, qui a ici une forme carrée, a des côtés dont la longueur dépend de l'enfoncement de la pointe pyramidale 10 et donc de la déformation interne des pièces de l'amortisseur. Par exemple, pour un mode particulier de réalisation, une empreinte sous la forme d'un carré de 0.94 mm de côté sera représentatif d'une déformation de 0.1 mm des pièces internes. La taille du carré formant l'empreinte indique donc le niveau de gravité du bottoming. De préférence, l'opérateur de maintenance disposera d'un programme informatique ou d'un abaque mettant en relation des tailles de carré avec des déformations internes supposées et/ou des opérations de maintenance à réaliser.

Les cales pelables 14 permettent de régler finement la position de la pointe pyramidale 10 pour que l'empreinte laissée dans le martyr soit suffisamment importante pour être détectable d'un simple coup d'œil.

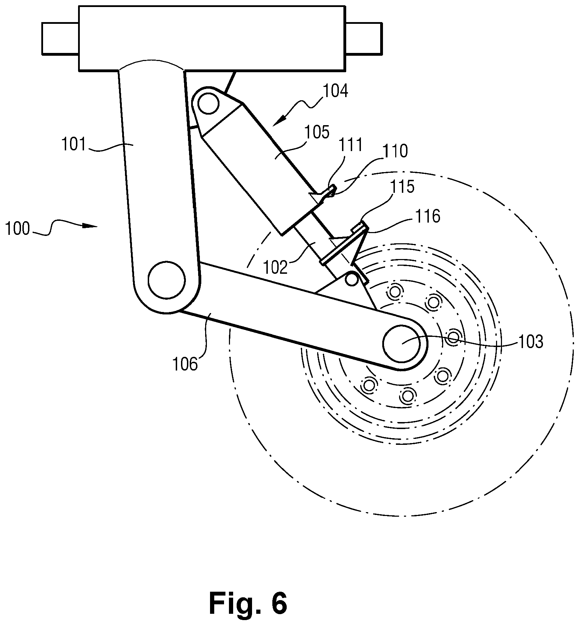

L'invention s'applique à d'autres types d'atterrisseurs. Sur la figure 6, on a par exemple illustré un atterrisseur 100 dont le caisson 101 reçoit à articulation un balancier 106 portant un essieu 103. Un amortisseur séparé 104 est attelé d'une part au caisson 101 et d'autre part au balancier 106. L'amortisseur 104 comporte un cylindre 105 dans lequel coulisse télescopi-quement une tige 102. Selon l'invention, on équipe le cylindre 105 d'un poinçon 110 porté par un support 111 solidaire du cylindre 105, et la tige 102 d'un martyr 115 porté par un support 116 solidaire de la tige 102. Le poinçon 110 et le martyr 115 sont disposés de façon à se percuter si l'amortisseur 104 vient en butée interne compressée lors d'un atterrissage.

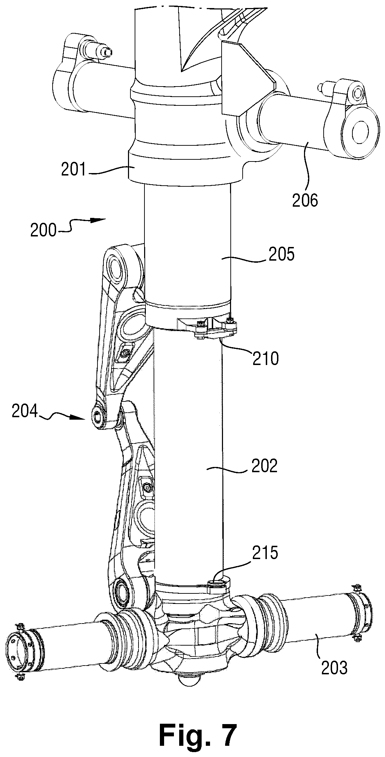

Bien entendu, la disposition la plus simple consiste à solidariser le poinçon et le martyr respectivement à l'un des éléments télescopiques de l'amortisseur de l'atterrisseur, comme illustré précédemment. Cependant, ce n'est pas toujours possible. Sur la figure 7, on a illustré un atterrisseur auxiliaire dont la tige est orientable pour permettre l'orientation des roues et dont les virages de l'aéronef au sol. Plus précisément, l'atterrisseur 200 comporte un caisson 201 au bas duquel un tube tournant 205 est monté pour tourner sous l'action d'une commande d'orientation 206. La tige 202, qui porte l'essieu 203, est montée pour coulisser à l'intérieur du tube tournant 205 et est reliée en rotation au tube tournant 205 par l'intermédiaire du compas 204. Ici, la tige coulissante 202 forme le premier élément télescopique d'un amortisseur (en l'occurrence son cylindre), tandis que le deuxième élément télescopique de l'amortisseur est une tige qui n'est pas visible ici mais qui s'étend à l'intérieur du caisson 201 pour être fixée à l'extrémité supérieure de celui-ci. Cette tige est inaccessible de l'extérieur. Pour contourner cette difficulté, on équipe la tige coulissante 202 d'un martyr sous la forme d'une pastille 215, comme précédemment, mais le poinçon, ici une pointe pyramidale 210, est maintenant porté par le tube tournant 205, c'est-à-dire par un élément de l'atterrisseur qui ne coulisse pas relativement au deuxième élément télescopique de l'amortisseur. Ainsi, lors d'une venue en butée interne de l'amortisseur, la pointe pyramidale 210 viendra comme auparavant percuter la pastille 215 pour y laisser une empreinte.

L'invention n'est pas limitée à ce qui vient d'être décrit, mais englobe au contraire toute variante entrant dans le cadre défini par les revendications. En particulier, bien que l'on ait indiqué que le poinçon a une forme de pointe pyramidale, toute autre forme pourra être retenue (pointe conique, bille...) du moment qu'elle est susceptible de laisser une empreinte dans le martyr. Bien que l'on ait indiqué que le poinçon était associé à des éléments de réglage de position sous forme de cales pelables, on pourra utiliser d'autres moyens de réglage, comme par exemple un vernier, ou encore associer ces moyens de réglage non pas au poinçon, mais au martyr.

En outre, bien que, quand cela est possible, il est préférable de solidariser le poinçon à l'une des parties de l'amortisseur en coulissement télescopique, et le martyr à l'autre desdites parties, on pourra plus généralement associer le poinçon et/ou le martyr à une portion de l'atterrisseur qui ne coulisse pas relativement à la partie de l'amortisseur concernée, comme par exemple le tube tournant de la figure 7, ou encore un support qui serait solidaire du balancier de la figure 6, du moment que quand l'amortisseur vient en butée interne compressée, le poinçon percute le martyr pour y laisser une empreinte.

Le poinçon et le martyr peuvent être réalisés en des matériaux quelconques du moment que le poinçon puisse pénétrer dans le martyr lors d'une arrivée en butée interne compressée.

## Revendications

1. Atterrisseur d'aéronef (50;100;200) comportant un amortisseur comportant des première et deuxième parties (1,2;105,102;201,202) montées à coulissement télescopique et susceptibles de venir en butée interne lors d'une compression de l'amortisseur, l'atterrisseur étant équipé d'un dispositif de détection d'une venue en butée interne de l'amortisseur, **caractérisé en ce que** ledit dispositif comprend d'une part un poinçon (10;110;210) solidaire de la première partie de l'amortisseur ou d'une portion de l'atterrisseur qui ne coulisse pas relativement à la première partie de l'amortisseur, et d'autre part un martyr (15;115;215) solidaire de la deuxième partie de l'amortisseur, ou d'une portion de l'atterrisseur qui ne coulisse pas relativement à la deuxième partie de l'amortisseur, le poinçon et le martyr étant disposés de sorte que le poinçon percute le martyr pour y former une empreinte quand les deux parties de l'amortisseur viennent en butée interne.

2. Atterrisseur d'aéronef selon la revendication 1, dans lequel le poinçon est une pointe pyramidale.

3. Atterrisseur d'aéronef selon la revendication 2, dans lequel la pointe pyramidale est solidaire d'une platine (11) rapportée sur l'atterrisseur avec interposition de cales pelables (14).

4. Atterrisseur d'aéronef selon la revendication 1, dans lequel le martyr est une pastille (15).

5. Atterrisseur d'aéronef selon la revendication 4, dans lequel la pastille est portée par un plateau (16) venu de matière avec une tige (2) coulissante de l'atterrisseur.

6. Atterrisseur d'aéronef selon la revendication 1, du type direct dans lequel la première partie de l'amortisseur est formée par un caisson (1) de l'atterrisseur et la deuxième partie de l'amortisseur est formée par une tige coulissante (2) portant au moins un essieu (3) et montée à coulissement télescopique dans le caisson, et dans lequel le poinçon (10) est porté par le caisson et le martyr (15) par la tige coulissante (2).

7. Atterrisseur d'aéronef selon la revendication 1, du type à balancier (106) articulé sur un caisson (101), l'amortisseur étant attelé au balancier et au caisson et comportant un cylindre (101) dans lequel une tige (102) est montée à coulissement télescopique, le poinçon (110) et le martyr (105) étant solidaires pour l'un du cylindre et pour l'autre de la tige.

8. Atterrisseur selon la revendication 1, du type à commande d'orientation comportant un tube tournant monté tournant sur un caisson de l'atterrisseur et relié par un compas à une tige (202) portant un essieu (203) et montée coulissante dans le caisson, la tige formant un cylindre de l'amortisseur de l'atterrisseur, le poinçon et le martyr étant solidaires pour l'un de la tige et pour l'autre du tube tournant.

## Patentansprüche

1. Luftfahrzeugfahrwerk (50; 100; 200), umfassend einen Stoßdämpfer, der erste und zweite Teile (1,2; 105, 102; 201, 202) umfasst, die teleskopisch verschiebbar gelagert und imstande sind, während einer Kompression des Stoßdämpfers zu einem Innenanschlag zu kommen, wobei das Fahrwerk mit einer Detektionsvorrichtung zur Erkennung des Innenanschlags des Stoßdämpfers ausgestattet ist, **dadurch gekennzeichnet, dass** die genannte Vorrichtung einerseits einen Stempel (10; 110; 210) umfasst, der fest mit dem ersten Teil des Stoßdämpfers oder einem Abschnitt des Fahrwerks verbunden ist, der sich relativ zum ersten Teil des Stoßdämpfers nicht verschiebt, und andererseits ein Opferteil (15; 115; 215), der fest mit dem zweiten Teil des Stoßdämpfers oder einem Abschnitt des Fahrwerks verbunden ist, der sich relativ zum zweiten Teil des Stoßdämpfers nicht verschiebt, wobei der Stempel und das Opferteil derart angeordnet sind, dass der Stempel auf das Opferteil aufschlägt, um in diesem eine Vertiefung zu bilden, wenn die beiden Teile des Stoßdämpfers zum Innenanschlag kommen.

2. Luftfahrzeugfahrwerk nach Anspruch 1, bei dem der Stempel eine pyramidenförmige Spitze ist.

3. Luftfahrzeugfahrwerk nach Anspruch 2, bei dem die pyramidenförmige Spitze fest mit einer Platte (11) verbunden ist, die an dem Fahrwerk unter Zwischenlage von abziehbaren Ausgleichsscheiben (14) befestigt ist.

4. Luftfahrzeugfahrwerk nach Anspruch 1, bei dem das Opferteil ein Plättchen (15) ist.

5. Luftfahrzeugfahrwerk nach Anspruch 4, bei dem das Plättchen von einer Platte (16) getragen wird, die einstückig mit einer Schubstange (2) des Fahrwerks ausgebildet ist.

6. Luftfahrzeugfahrwerk nach Anspruch 1, vom direkten Typ, bei dem der erste Teil des Stoßdämpfers aus einem Kasten (1) des Fahrwerks und der zweite Teil des Stoßdämpfers aus einer Schubstange (2) gebildet ist, die mindestens eine Achse (3) trägt und teleskopisch verschiebbar in dem Kasten gelagert ist, und bei dem der Stempel (10) von dem Kasten und das Opferteil (15) von der Schubstange (2) getragen wird.

7. Luftfahrzeugfahrwerk nach Anspruch 1, vom Typ mit Schwinghebel (106), der an einem Kasten (101) angelenkt ist, wobei der Stoßdämpfer an dem Schwinghebel und dem Kasten (101) angekoppelt ist und einen Zylinder (101) umfasst, in dem eine Stange (102) teleskopisch verschiebbar gelagert ist, wobei die beiden Elemente Stempel (110) und Opferteil (105) fest verbunden sind, das eine mit dem Zylinder und das andere mit der Stange.

8. Fahrwerk nach Anspruch 1, vom steuerbaren Typ, umfassend ein Drehrohr, das drehbar an einem Kasten des Fahrwerks gelagert und über eine Schere mit einer Stange (202) verbunden ist, die eine Achse (203) trägt und in dem Kasten verschiebbar gelagert ist, wobei die Stange einen Zylinder des Stoßdämpfers des Fahrwerks bildet, und wobei die beiden Elemente Stempel und Opferteil fest verbunden sind, das eine mit der Stange und das andere mit dem Drehrohr.

## Claims

1. An aircraft undercarriage (50; 100; 200) including a shock absorber comprising first and second portions (1, 2; 105, 102; 201, 202) that are mounted to slide telescopically relative to each other and that can come into internal abutment in the event of the shock absorber being compressed, the undercarriage being fitted with a detector device for detecting the shock absorber coming into internal abutment, the aircraft undercarriage being **characterized in that** said device comprises firstly a punch (10; 110; 210) secured to the first portion of the shock absorber or to a portion of the undercarriage that does not slide relative to the first portion of the shock absorber, and secondly a sacrificial piece (15; 115; 215) secured to the second portion of the shock absorber or to a portion of the undercarriage that does not slide relative to the second portion of the shock absorber, the punch and the sacrificial piece being arranged in such a manner that, in the event of the two portions of the shock absorber coming into internal abutment, the punch strikes the sacrificial piece so as to form an indentation therein.

2. An aircraft undercarriage according to claim 1, wherein the punch is a pyramid-shaped point.

3. An aircraft undercarriage according to claim 2, wherein the pyramid-shaped point is secured to a plate (11) fitted to the undercarriage with interposed peelable shims (14).

4. An aircraft undercarriage according to claim 1, wherein the sacrificial piece is a pellet (15).

5. An aircraft undercarriage according to claim 4, wherein the pellet is carried by a tray (16) formed integrally with the sliding rod (2) of the undercarriage.

6. An aircraft undercarriage according to claim 1, wherein the undercarriage is of the direct type in which the first portion of the shock absorber is formed by a strut (1) of the undercarriage and the second portion of the shock absorber is formed by a sliding rod (2) carrying at least one axle (3) and mounted to slide telescopically in the strut, and wherein the punch (10) is carried by the strut and the sacrificial piece (15) is carried by the sliding rod (2).

7. An aircraft undercarriage according to claim 1, wherein the undercarriage is of the type having a rocker lever (106) hinged to a strut (101), the shock absorber being coupled to the rocker lever and to the strut and comprising a cylinder (101) in which a rod (102) is mounted to slide telescopically, the punch (110) and the sacrificial piece (105) being secured, one to the cylinder and the other to the rod.

8. An aircraft undercarriage according to claim 1, wherein the undercarriage is of the steerable type comprising a steering tube mounted to turn relative to a strut of the undercarriage and connected by a scissors leakage to a rod (202) carrying an axle (203) and slidably mounted in the strut, the rod forming a cylinder of the shock absorber of the undercarriage, the punch and the sacrificial piece being secured, one to the rod and the other to the steering tube.
